(19) Europäisches Patentamt

European Patent Office

Office européen des brevets

(11) EP 1 414 556 B1

(12) EUROPEAN PATENT SPECIFICATION

(45) Date of publication and mention
of the grant of the patent:
**05.01.2005 Bulletin 2005/01**

(21) Application number: **02751150.0**

(22) Date of filing: **17.07.2002**

(51) Int Cl.⁷: **B01F 3/08**, A23L 1/05,
A61K 7/48

(86) International application number:
**PCT/EP2002/008049**

(87) International publication number:
**WO 2003/013710 (20.02.2003 Gazette 2003/08)**

(54) **PROCESS FOR THE PREPARATION OF AN EMULSION OR DISPERSION WITH CONTROLLED SHAPE OF THE DISPERSED PHASE**

VERFAHREN ZUR HERSTELLUNG EINER EMULSION ODER DISPERSION MIT KONTROLLIERTER FORM DER DISPERGIERTEN PHASE

PROCEDE PERMETTANT DE PREPARER UNE EMULSION OU UNE DISPERSION EN SELECTIONNANT LA FORME DE LA PHASE DISPERSEE

(84) Designated Contracting States:
**AT BE BG CH CY CZ DE DK EE ES FI FR GB GR IE IT LI LU MC NL PT SE SK TR**

(30) Priority: **10.08.2001 EP 01203036**

(43) Date of publication of application:
**06.05.2004 Bulletin 2004/19**

(73) Proprietors:
• **UNILEVER N.V.**
**3013 AL Rotterdam (NL)**
Designated Contracting States:
**AT BE BG CH CZ DE DK EE ES FI FR GR IT LI LU MC NL PT SE SK TR**
• **Unilever Plc**
**London, Greater London EC4P 4BQ (GB)**
Designated Contracting States:
**CY GB IE**

(72) Inventors:
• **FISCHER, Peter A, ETH-Zentrum**
**8092 Zurich (CH)**

• **HERMANSSON, Anne-Marie, SIK**
**402 29 Gothenburg (SE)**
• **WALKENSTROEM, Pernilla, SIK**
**40229 Gothenburg (SE)**
• **WALTHER, Bernhard, SIK**
**40229 Gothenburg (SE)**
• **WINDHAB, Erich J., ETH-Zentrum**
**8092 Zurich (CH)**

(74) Representative: **Van Velzen, Maaike Mathilde et al**
**Unilever N.V.**
**Unilever Intellectual Property Group**
**Olivier van Noortlaan 120**
**3133 AT Vlaardingen (NL)**

(56) References cited:
**EP-A- 0 355 908         EP-A- 0 432 835**
**WO-A-00/44548          WO-A-99/47337**
**WO-A-99/51193          WO-A-99/51716**
**US-A- 5 659 000         US-A- 6 136 363**
**US-A- 6 165 534**

# Description

## Field of the invention

The invention relates to a process for the preparation of an emulsion or dispersion with controlled shape of the dispersed phase, which process comprises the steps of mixing, deformation and fixation.

## Background of the invention

Compositions comprising a dispersed phase are encountered for example in food products such as creams, margarine, butter, mayonnaise, dressings, sauces and other food emulsions, and in other compositions such as skin creams, moisturising lotions, sun screens, shampoos and deodorants.
The rheological characteristics of these compositions to a large extent depend on the composition, texture and shape of the dispersed phase. The dispersed phase can also serve as a carrier for functional compounds such as perfumes.
EP-A-432835 discloses fluid compositions comprising at least one chemically setting gelling agent. The compositions can be obtained by shearing a liquid containing a chemically setting gelling agent, while gelation occurs. The compositions comprise gel particles having a mean diameter of preferably less than 100 micrometer. Such compositions allegedly possess favourable rheological properties. The compositions obtained by the process disclosed in this document will show a not well controlled size distribution and irregular shapes without control due to a mixture of flow types being present in the flow inducing apparatus. The shear inducing apparatus are A units and C units which impart turbulent flow. EP-A-432835 discloses explicitly that the microgels present in this composition are preferably irregularly shaped.
EP-A-432835 does not disclose how the rheological properties of the claimed fluid compositions can be adjusted to the desired ones, nor does this document provide any teaching how a composition with well defined properties can be obtained.
Furthermore Tolstogusov, Gums and Stabilisers for the food industry, 8, Oxford univ press 1006, pages 151-160, ISBN 0199636273 discloses that protein precipitates can be made by imparting shear to a protein containing phase separated system. The shear conditions are not specified in this document. The fibrous protein precipitates are applied in foods. A disadvantage of these systems is that they are not homogeneous. The phase separation leads to inhomogeneous systems which can not impart the desired rheological parameters to food compositions.
Therefore it is an object of the current invention to provide a process for preparing a composition comprising a dispersed phase, wherein the properties of the composition can be carefully controlled.

## Definition of the invention

It has surprisingly been found that a process wherein a composition comprising a dispersed phase is subjected to a specific flow regime in combination with a deformation and a fixation treatment, leads to products whose properties can be carefully controlled.
Therefore the invention relates to a process for the preparation of a composition comprising at least two phases, a first phase which is a continuous phase and a second phase which is a dispersed phase, said process comprising the steps of

a) providing the continuous phase material in a fluid form
b) providing the dispersed phase material
c) combining the continuous phase material and the dispersed phase material, preferably by adding the dispersed phase to the continuous phase, resulting in a composition comprising at least two phases,
d) subjecting the composition to a deformation treatment by flow,
e) subjecting the composition to a fixation treatment, wherein step (e) is carried out during or after step (d) and

wherein the deformation treatment is selected from shear flow, elongational flow or a combination of thereof.
In a second aspect the invention relates to a composition obtainable by the claimed process and to a food product comprising such composition.
In a further aspect the invention relates to an apparatus suitable for use in the claimed process.

## Detailed description

Description of the figures:

Figure 1 shows various flow types
Figure 2 shows a schematic drawing of the claimed apparatus
Figure 3 shows a 4RM used in the examples
Figure 4 shows starting point 1 and 2 (see examples) and various fixation zones (see examples).
Figure 5 shows several possible shapes and their roundness or circularity shape factors.

Monodisperse droplet size distribution is defined as mentioned in the Encyclopedia of emulsion technology, page 70-73 (Edited by P. Becher, 1983).
According to this definition a $\sigma 2$ of less than 0.2 is characteristic for a monodisperse droplet size distribution.
The current invention enables the formation of a well defined dispersed phase shape by combining a dispersed phase and a continuous phase such that the dispersed phase follows a predetermined particle track along which the dispersed phase experiences a well defined shear and/or elongational flow history. This history is believed to determine the extent of deformation and hence the shape of the dispersed phase.

The claimed process relates to the preparation of a composition comprising at least two phases. These two phases are a continuous phase and a therein dispersed phase.

The dispersed phase is preferably present in the continuous phase in the form of discrete regions. The size of the dispersed phase shapes is determined by the $D_{3,2}$, which is determined using a Malvern Mastersizer or an apparatus with similar functionality, as described in the examples.

In the context of the invention a completely relaxed dispersed phase particle is in the form of a sphere. All further forms are deformed shapes that can be obtained by exerting energy to the system, for example in the form of shear or elongational flow or combinations thereof. A particle is partly relaxed if it is not yet in the form of a perfect sphere.

In the process according to the invention, at least two phases are combined. Preferably these two phases are not miscible such that dispersed droplets of one phase in the other are formed upon combining the two phases. Preferably the two phases are different in composition whereby each is selected from the group comprising aqueous phase, aqueous phase comprising a gelling agent, oil phase, polar and non polar liquids. It is considered that it is within the general capability of a skilled person to select immiscible phases.

Examples of immiscible phases for the purpose of the invention include:

- an oil phase and aqueous phase; the aqueous phase may for example be (partly) gelled or viscosified
- an aqueous phase and a phase based on polyethylene glycol
- an aqueous phase comprising a gelling agent and an aqueous phase essentially free of a gelling agent,
- an aqueous phase comprising a gelling agent and an aqueous phase comprising another gelling agent that results in gelling of the second phase at a different moment than the first phase
- oil phases having different polarity

In step (a) of the process according to the invention the continuous phase material is provided in a fluid form. In the context of the invention fluid is defined as pumpable and/or flowable, preferably having a viscosity of from 0.001 Pa.s to 10 Pa.s at a temperature between -20 and 80 °C and a shear rate between 0.01 and 10 s$^{-1}$ as measured by well known, common methods such as decsribed in textbooks on rheology e.g. Rheology: Principles, Measurements and applications, C.W. Macosko, VCH Publishers, Inc 1994.

The continuous phase material can be fluid as such or may be brought in this state for example by taking any suitable measures such as heating, cooling or a chemical reaction.

The dispersed phase material is provided in step (b) of the claimed process. The dispersed phase material may be in any physical state, whereby a fluid state as defined above is highly preferred as this enables a relatively easy combination of the two phases.

In step (c) the two phases are combined. The combining can be realised by any suitable method, for example by pouring or pumping one phase into the other under stirring or by injection of one phase into the other. It is highly preferred that the dispersed phase is added to the continuous phase.

The combination in step (c) preferably results in a composition which comprises a continuous phase and a dispersed phase, which dispersed phase is present in the form of droplets, characterised by a monodisperse droplet size distribution. The term monodisperse droplet size distribution is described above. It was found that starting from a monodisperse droplet size distribution of the dispersed phase, enables accurate control of the final particle shape and size after deformation and fixation, thus leading to products with well defined, controlled, rheological properties.

The preferred monodisperse droplet size distribution can be obtained by carefully selecting the conditions under which the dispersed phase and the continuous phase are combined.
A suitable technique for obtaining a monodisperse droplet size distribution is for example based on the theory by Rayleigh - Taylor on instability which can be observed when one phase, the dispersed phase, is injected into another phase, the continuous phase ( this feature is for example described by Walstra et al in Encyclopaedia of emulsion technology, 1983, volume 1, page 76). Alternatively injection of droplets of a specific volume of dispersed phase into the aqueous phase is possible.
In the Rayleigh- Taylor based method, the relative ratio of the flow speed of the dispersed phase and the flow speed of the continuous phase was found to influence the droplet size, in combination with the diameter of the nozzle through which the dispersed phase is pumped into the continuous phase.

In an even more preferred embodiment, the dispersed phase is added to the continuous phase continuously, as far as the equipment allows.

Preferably in step (c) the dispersed phase is injected or pumped into the continuous phase such that the dispersed phase follows a pre-determined track.

It was found that for the latter method of defined droplet injection, the point of addition of the dispersed phase to the continuous phase may decrease potential uncontrolled deformation.

Therefore, preferably for the injection method, the dispersed phase is added to the continuous phase in a stagnation zone. A stagnation zone is a zone wherein there is no or very limited flow of the continuous phase.

In step (d) the composition is subjected to a deformation treatment by shear flow or elongational flow or a combination of these.

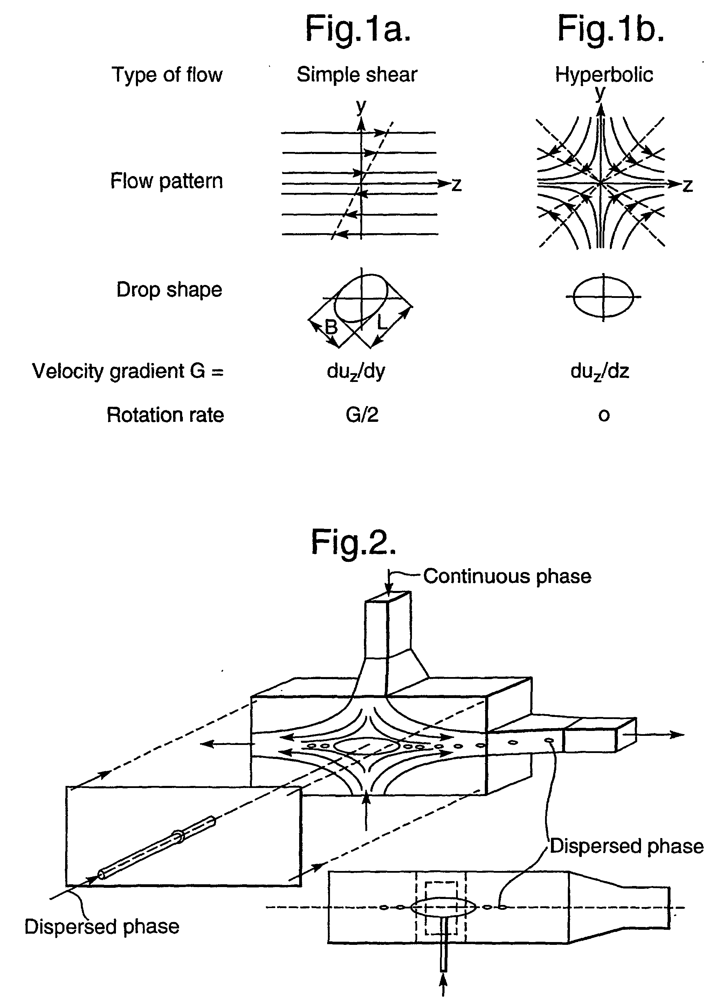

In the context of the invention shear flow is defined as planar flow as shown in figure 1a. Elongational flow is defined as hyperbolic, biaxial flow as shown in figure 1b.

It was found that only these two types of flow and combinations thereof lead to a dispersed phase with controlled size and shape.

A further definition of flow is also given in J. Fluid Mech, 1986, vol 173, page 134, by Stone and Bentley.

Weak laminar flow and turbulent flow are unsuitable for the process according to the invention. These types of flow are for example encountered in a scraped surface heat exchanger, a votator (A-unit), a pin stirrer (C- unit), a homogeniser and a rotorstator which are well known equipment for preparation of emulsions. Documents wherein these types of apparatus are applied are for example US-A-5,659,000, EP-A-432,835, US-A-6,165.534 and WO-A-99/51716. The turbulent flow in these apparatus' is arbitrary and undefined. Their presence leads to the formation of particles with a random particle shape distribution whereas it is an object of the current invention to provide compositions with a defined particle shape distribution. This means that as a result of the process according to the current invention, all dispersed phase droplets will have a common denominator defining their shape. Although the presence of weak laminar flow and turbulent flow in a minor part of the fluid volume in which the particles are formed, is in most cases tolerable, they are preferably fully absent. In a preferred embodiment, weak laminar flow and turbulent flow are present in at most 10% of the entire flow volume. Most preferred weak laminar flow and turbulent flow are entirely absent.

The combination of shear flow and elongational flow enables the formation of a range of particle shapes. Purely elongational flow will lead to deformation of a dispersed phase in the form of ellipsoids, turning into long filaments if the flow is maintained sufficiently long.

It will be appreciated that the deformation of the dispersed phase droplets is effective only as long as the deformation treatment lasts. Therefore a fixation treatment is required to fix the dispersed phase shape and size as desired. The shape and size can be carefully controlled by selecting the moment at which fixation takes place, preferably in combination with the speed of fixation.

In the process according to the invention, the dispersed phase, the continuous phase or both can be subject to the fixation. Preferably the dispersed phase is subject to fixation. Fixation of at least one of the phases can be partial or full fixation. Hence part of the phase volume can be fixed or the entire volume can be fixed.

If the dispersed phase is fixed, it is possible that the fixation results in a (partial) coating of the dispersed phase at the interface between the continuous phase and the dispersed phase. According to a more preferred embodiment, essentially all of the dispersed phase ingredients are part of the fixed structure.

On the basis of the guidance provided below, the process according to the invention enables the formation of a dispersed phase with a well defined size and shape which leads to control of the rheological properties of the final composition.

Dispersed phase particles which result from a fixation prior to or at the beginning of the deformation treatment, are usually nearly spherical. This (nearly) spherical form is believed to be due to the short period of time during which the particle is susceptible to stresses from the flow field. The fixation is preferably carried out such that the contents of the dispersed phase are at least partially fixed.

Dispersed phase particles which are fixed after a substantial deformation treatment in a flow field, before the strength of the flow field is reduced tend to have an ellipsoidal shape, wherein the aspect ratio (length divided by width) tends to be higher for those droplets which have been subjected to flow for a longer period of time.

Dispersed phase particles that are fixed after the flow field strength has been reduced, tend to be complex in shape.

It has been observed that a droplet of the dispersed phase which is subjected to deformation in a flow field, will relax once the strength of the flow field is reduced. Due to this relaxation the drop is no longer ellipsoidal in shape but tends to become irregular in shape and may for example obtain protruding arms. The latter applies especially for a combination of shear and elongational flow. By fixation during this relaxation treatment, the shape as obtained during fixation is set as the final shape. Also in this embodiment the continuous phase, the dispersed phase or (parts of ) both can be subject of fixation. However the fixation of the dispersed phase is highly preferred.

In the method according to the invention kinetics of gelation and time of relaxation are carefully chosen to control the formation of a dispersed phase with the desired shape.

The fixation can be obtained in any suitable way. The fixation treatment is preferably selected from the group comprising a temperature treatment, chemical fixation or crystallisation. The fixation method that is selected depends on the ingredient composition of the dispersed phase and of the continuous phase.

Fixation by temperature treatment is selected if a gelling agent is used, whose setting is dependent on temperature. Examples of such gelling agents include gelatine, which sets at a temperature of below about 40 °C and agar which sets at a temperature of below about 45 °C (reference is made to Handbook of hydrocolloids, edited by G.O. Phillips and P.A. Williams, published by CRC Press). Also proteins that gel/form a network by heat treatment are suitable for fixation by temperature treatment.

It will be appreciated that the exact gelling temperature is determined, among others, by quality, salt, purity, concentration and pH.

According to another embodiment, a chemically setting gelling agent is used. By a chemically setting gelling agent is meant a component which, after being dispersed in another phase such as a liquid, will set to a gel when allowed to chemically interact with a supplementary active component, which active component is usually a cation, or which sets due to the occurrence of a chemical reaction such as oxidation. A gelling agent setting upon a pH change is also encompassed in the term chemically setting gelling agent. Examples of such pH dependent gelling agents are proteins which will generally set or precipitate at pH below the iso-electric point.

In such cases where a chemically setting gelling agent is applied, chemical fixation is preferably applied.

Chemical fixation can be obtained by combining the gelling agent with a salt with an effective cation to form a salt of the gelling agent and the cation. The combination of the gelling agent with the cation may be realised by the addition of the cation as such or alternatively by converting a precursor compound, present in the phase comprising the gelling agent, or the other phase, into the free, effective, cation. The cation is preferably selected from $Ca^{2+}$ and $K^+$ and mixtures thereof. The most preferred cation is $Ca^{2+}$.

In an even more preferred embodiment, the gelling agent is selected from the group comprising gelatine, $\kappa$- carrageenan, pectin, iota-carrageenan, gellan, alginate, furcelleran or mixtures thereof, most preferably gelatine or $\kappa$- carrageenan.

According to another embodiment, fixation is obtained by crystallisation. This is for example suitable for compounds which crystallise upon cooling such as triglyceride oils.

It will be appreciated that the kinetics of gelation are influenced by concentration of the gelling agent, and the entire composition including the influence of minor components, viscosifiers and crystal habit modifiers.

The process according to the invention is applicable for compositions comprising at least two phases. It is possible to use multicomponent systems which for example comprise more than one dispersed phase or more than one continuous phase. Multiple continuous phases can for example be obtained by addition.

In a preferred embodiment, in the method according to the invention, a third phase is added, which is a dispersed phase. This phase may for example be present as a separate dispersed phase or may be present in the first dispersed phase. This phase may be added at any time in the process.

In an even more preferred embodiment the invention relates to a process as claimed wherein the continuous phase is based on triglyceride oils and a first dispersed phase comprises a gelling agent and a second dispersed phase comprises a gelling agent, wherein the setting of the first and the second gelling agent is obtained by different measures.

In a most preferred process, the first gelling agent is a chemically setting gelling agent and the second gelling agent is a temperature dependent gelling agent. This combination of gelling agents enables the formation of products wherein two different dispersed phases are present. The size and shape of the two dispersed phases can be determined by varying the extent of shear and/or elongation treatment and the moment in time at which fixation is carried out.

The invention is for example suitable for shaping particle particles in the area of ceramics.

In a further aspect the invention relates to a composition obtainable by the process according to the invention. Such compositions comprise a dispersed phase with a defined shape which originates from the controlled application of shear flow and/or elongational flow. The dispersed phase preferably is characterised by the presence of various points and/or axes of symmetry. The dispersed phase has a shape which may be defined by the roundness of the particles. Roundness (in literature sometimes also called circularity, surface factor or compactness) is defined as:

$$\text{Roundness} = \frac{(\text{perimeter})^2}{4\pi(\text{projected area})}$$

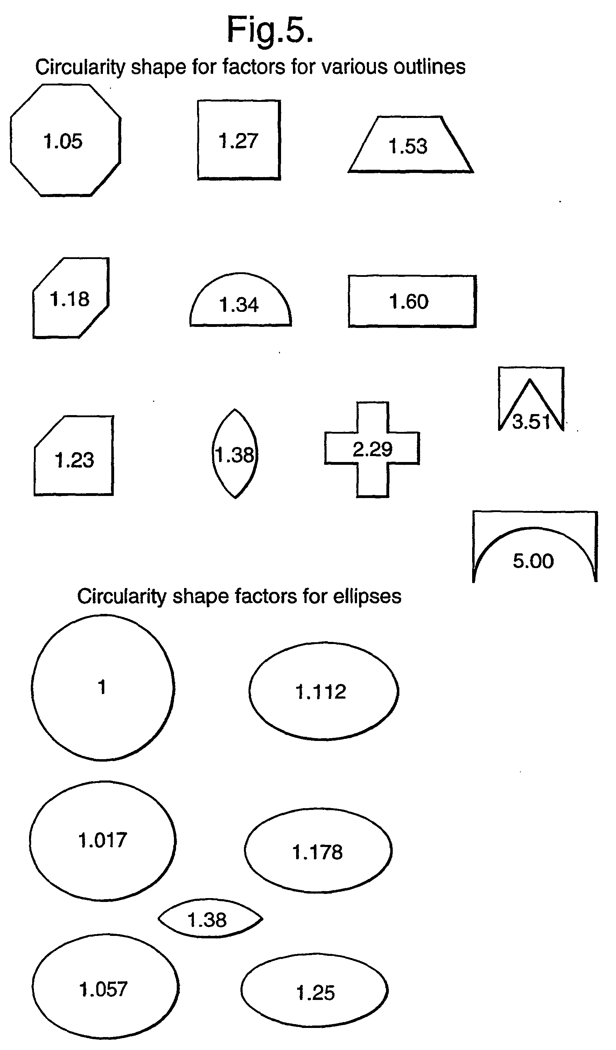

Preferably the dispersed phase is characterised by a roundness of from 1.01 to 50, more preferred from 1.01 to 10, most preferred 1.1 to 5. A sphere will have a roundness of 1 and is excluded from the scope of the current invention. See further the roundness values for several shapes in figure 5.

Preferable from 90 to 100 number% of the dispersed phase drops show the same roundness value and/or the same axes and/or points of symmetry.

The products of the current invention differ over the documents cited above where turbulent flow is applied to a gelling composition to form so called sheared gels. The sheared gel products comprise an irregularly shaped dispersed phase with uncontrolled particle shape distribution. We have found that for such compositions there is no common characteristic of the dispersed phase in terms of axes or point of symmetry for the majority of dispersed phase drops.

In another aspect, the invention relates to food products comprising a composition obtainable by the process according to the invention.

In a further aspect the invention relates to an apparatus suitable for carrying out the above described process. Therefore the invention relates to an apparatus comprising a flow chamber, wherein shear flow, elongation flow or a combination thereof are exerted on the contents, said flow chamber comprising a means for supply of the continuous phase, means for addition of a dispersed phase or phases, means for controlling the flow speed and type, means for outlet of the combined phases, said apparatus further comprising means for reducing the flow strength, and means for obtaining fixation.

Preferably said apparatus comprises a stagnation point or zone.

Figure 2 shows a schematic set up of such apparatus.

An example of a suitable apparatus is a 4-roll mill, fitted with an outlet for the fluid content which is constructed such that it has a suitable means for reducing flow strength, which provides relaxation of the deformation strength of the flow, connected with a means suitable for fixation of at least one of the phases.

A 4-roll mill consists of four rotating rollers vertically placed in a basin of liquid. A 4-roll mill is described e.g. in Rheological Phenomina in Focus, page 124, by D.V. Boger and K. Walters, published 1993, Elsevier science publishers and in J. colloid Science, 16, 210-237, (1961), by FD Rumscheidt and Mason. The device can be used to create pure elongational flow and by varying the rotation speed of the individual rollers, any desired combination of shear flow and elongational flow can be obtained. Also pure shear flow can be created.

Another example of a suitable apparatus is an opposed jets device disclosed by Jos Janssen (Thesis Eindhoven Univeristy the Netherlands, publicly defended 2 November 1993, "Dynamics of liquid-liquid mixing", appendix B, page 100).

The means suitable for obtaining fixation can for example be selected from the group comprising a heating element, a cooling system, means for supplying a composition to the continuous phase flow, and combinations thereof.

The means providing relaxation can for example be formed by a broadening of the outlet pipe for the deformed composition. Broadening of the pipe while maintaining all other conditions constant, will lead to a reduction in flow stress and hence to at least partial relaxation of the dispersed phase structures.

In a preferred embodiment, the apparatus is composed such that the inlets and outlets can be adapted in length and position angle with respect to a central body of the apparatus. For example shortening of the outlet pipe may lead to a different type of shape being formed.

In a preferred apparatus, the flow chamber is a 4-roll mill, which is provided with means for supply of the continuous phase and means for addition of a dispersed phase in a stagnation zone, means for outlet of the continuous phase, and a pipe broadening for reducing the flow strength followed by a temperature setting element for fixation.

The invention will now be illustrated by the following non-limiting examples.

## Examples

Materials

Gelatine obtained from Extraco, Klippan, Sweden, in granular form with a Bloom strength of 250 was used as dispersed phase.

This gelatine stems from the acid process which is one of the processes used for gelatine extraction, and is characterised by an isbelectric point of between 7.5 and 9 (Johnston Banks, 1990, Gelatine In Food Gels (Harris P. Ed) Elsevier applied science publishers, London, New York, pp 233-289). The mean molecular weight was 118kDa. To enhance contrast of the naturally transparent gelatine, solutions were stained with 0.03% Toluidine (Merck, Darmstadt, Germany).

The continuous phase was silicon oil (polydimethoxysiloxane, PDMS) with a kinematic viscosity of $5000mm^2/s$ at 25 °C. The oil was purchased from Wacker Chemie GmbH, Munich, Germany. At 5 °C the viscosity of the oil was 7.61 Pa.s (standard deviation was 0.2 Pa.s). The viscosity measurement was performed in a Bohlin VOR Rheometer (Bohlin instruments, LTD, UK) using a co-axial cylindrical geometry.

Methods.

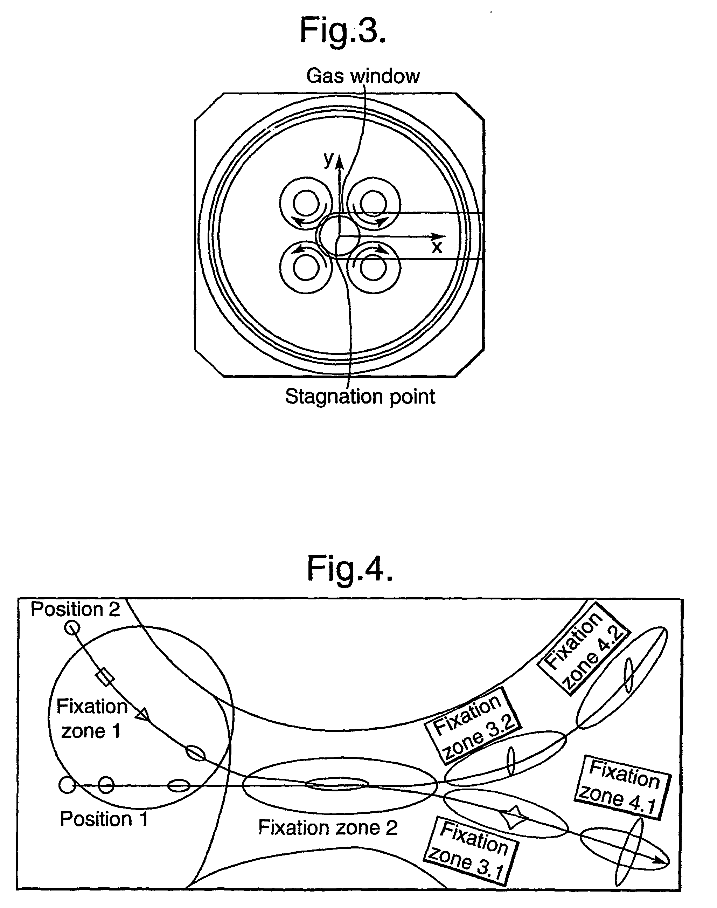

The flow chamber used was a 4-roll mill (4RM) which is illustrated in figure 3. The 4RM consists of two parts, the lid and a basin. The grey, semitransparent part in figure 3 is the lid, to which four cylindrical rollers are attached. The rollers have a diameter of 45 mm and a height of 14 mm. The lid has an opening which enables addition and observation of drops and examination of the streamlines. Two motors (Maxon DC P 09) were attached to the lid of the 4RM. Each motor drives two diagonal rollers. The roller speed was controlled by potentiometers. The depth of the basin is 20 mm. The basin has a sandwich bottom which enables external temperature control of the system. In the middle of the basin, a glass window was placed to enable the passing of a light beam.

The dimensions of the 4 RM are set to allow the adaptation to microscopes.
The flows possible in a 4 RM are illustrated in Bentley et al, J. Fluid Mech, 1986, vol 173, pp 131-158.

The basin was filled with the continuous phase and the rollers were immersed in the continuous phase. Enough oil was added to reach the top of the rollers. The temperature of the oil was kept constant at 5 +/- 0.5°C during all experiments. Gelatine drops were added to the oil by means of a pipette and a tailored mould for pipette tips, attached to the lid of the 4 RM. The mould controlled the position of the added drop to the 4 RM. To further control the position of the added drop and thus the streamline it follows, a macro program was written in Contextvision microGOP 2000/s software to measure the position of the drop relative to the x/y system of the 4 RM. The starting position of all drops was measured and, within one drop size, the standard deviation for the x and y direction for two positions 1 and 2 as indicated in figure 4 was never larger than 35 mm.

The temperature of the gelatine was 60 °C. The pipette tips were pre-heated to 60 °C in order to avoid setting of gelatine in the pipette tips. After the addition of the gelatine drops the rollers were started, and the dispersed phase drops became subject to different flow patterns during cooling and subsequent gel formation in the 4RM. A CCD (charged coupled dipole) camera equipped with a macro-objective was used to follow and record the progress of the drop shape. One image was taken every 0.65 s. The starting position, drop size, gelatine concentration and roller speed (flow strength) were all varied according to table 1.

Table 1

| Variable | values |
|---|---|
| Starting position of the drop | P1, P2 |
| Drop size (µl) Drop size in diameter (mm) | 2.5, 5, 10 1.68, 2.12, 2.67 |
| Gelatine concentration (wt%) | 5, 7.5, 10, 15 |
| Roller speed (rpm) | 10, 15 |

Two injection points, P1 and P2 were chosen for injection of the dispersed phase. The drop size and roller speed did not significantly affect the streamlines of the drops. When following the streamlines from P1, the drop is subjected to pure elongational flow and when following the streamlines of P2, the drop is subjected to a mixture of shear flow and elongational flow. The residence time of the drops in the 4 RM varied with the roller speed and starting position of the drops.

**Results**

Depending on the variable set up as given in table 1, gel formation for the gelatine drops was completed at different positions in the 4 RM. The zones where fixation took place are referred to as fixation zones. The different fixation zones are listed in figure 4.

Drops that were fixated in zone 1 were found to be nearly spherical. In general it was found that small drops with high gelatine concentration will be fixated in zone 1. The roundness value was between 1 and 1.005.

Drops that were fixated in zone 2 had an ellipsoidal shape. From the results of starting position P2 and P1 it is concluded that the drops subjected to a mixture of shear flow and elongational flow have a smaller aspect ratio than drops submitted to pure elongational flow (P1). The roundness value was generally between 1.11 and 4.

Drops that were fixed in zone 3 show complex shapes. The mechanism for the complex shape formation is believed to be based on elongation, relaxation and fixation. When the velocity gradients of the flow turn negative and relaxation starts, it is believed that gel formation has only taken place at the pointed ends and for a very thin layer on the surface of the drops. Thus, the complex form appears due to relaxation of the body of the drops, which causes a pinching effect of two protruding arms. Under conditions of pure elongational flow (P1), the protruding arms were found to be orthogonal to the body of the ellipsoidal drop. Under conditions of mixed elongational flow and shear flow, the protruding arms were not right-angled but rather oriented according to the stream line they followed. The roundness value was between 2.2 and 50.

Drops that were fixated in zone 4, were found to show complex shapes, which are believed to depend to a large extent on the state of relaxation for the respective drops.

The above experiments show that the current invention enables creating a tailor made size and shape of a dispersed phase by adjusting the variables, type of flow, droplet size, extent of relaxation and speed/point of fixation.

**Claims**

1. Process for the preparation of a composition comprising at least two phases, a first phase which is a continuous phase and a second phase which is a dispersed phase, said process comprising the steps of

   a) providing the continuous phase material in a fluid form,
   b) providing material for the phase to be dispersed,
   c) adding material for the phase to be dispersed to the continuous phase material resulting in a composition comprising at least two phases,
   d) subjecting the dispersed phase to a deformation treatment by flow,
   e) subjecting the dispersed phase to a fixation treatment,

   wherein step (e) is carried out during or after step (d) **characterised in that** the deformation treatment is selected from elongational flow or a combination of shear flow and elongational flow.

2. Process according to claim 1 wherein the composition in step (c) comprises a continuous phase and a dispersed phase, which dispersed phase is present in the form of droplets, **characterised by** a monodisperse droplet size distribution.

**3.** Process according to claim 1 or claim 2 wherein in step (c) the dispersed phase is injected or pumped into the continuous phase such that the dispersed phase follows a pre-determined track.

**4.** Process according to any one of the preceding claims wherein the fixation treatment is selected from the group comprising a temperature treatment, chemical fixation or crystallisation.

**5.** Process according to any one of the preceding claims wherein the continuous phase is based on oil.

**6.** Process according to any one of the preceding claims wherein the dispersed phase is an oil phase or an aqueous phase comprising a gelling agent.

**7.** Process according to claim 6 wherein the gelling agent is selected from the group comprising gelatine, κ-carrageenan, pectin, iota-carrageenan, alginate, gellan, furcelleran or mixtures thereof, more preferably gelatine or κ-carrageenan.

**8.** Process according to any one of the preceding claims wherein fixation takes place after a first deformation treatment, at a point in time when the deformed droplets have relaxed partly.

**9.** Process according to any one of the preceding claims wherein the dispersed phase comprises at least two phases, preferably an oil phase and an aqueous phase.

**10.** Composition obtained by a process according to any one of the preceding claims.

**11.** Food product comprising a composition obtained by a process according to any one of claims 1-9.

**12.** Apparatus comprising a flow chamber, wherein elongational flow or a combination of shear flow and elongational flow is exerted on the contents, said flow chamber comprising a means for supply of the continuous phase, means for addition of a material for the phase to be dispersed, means for controlling the flow speed and type, means for outlet of the continuous phase, means for reducing the flow strength, and means for obtaining fixation.

**13.** Apparatus according to claim 12, comprising a stagnation point or zone.

**Patentansprüche**

**1.** Verfahren zur Herstellung einer Zusammensetzung, die mindestens zwei Phasen umfasst, eine erste Phase, die eine kontinuierliche Phase ist, und eine zweite Phase, die eine dispergierte Phase ist, welches Verfahren die Schritte umfasst:

a) Vorsehen des Materials der kontinuierlichen Phase in fluider Form,
b) Vorsehen eines Material für die zu dispergierende Phase,
c) Zusetzen eines Materials für die zu dispergierende Phase zum Material der kontinuierlichen Phase, was zu einer mindestens zwei Phasen umfassenden Zusammensetzung führt,
d) Unterziehen der dispergierten Phase einer Verformungsbehandlung durch Strömung,
e) Unterziehen der dispergierten Phase einer Fixierbehandlung,

wobei Schritt (e) während oder nach Schritt (d) durchgeführt wird, **dadurch gekennzeichnet, dass** die Verformungsbehandlung ausgewählt ist aus einer Dehnströmung oder einer Kombination von Scherströmung und Dehnströmung.

**2.** Verfahren nach Anspruch 1, wobei die Zusammensetzung in Schritt (c) eine kontinuierliche Phase und eine dispergierte Phase umfasst, welche dispergierte Phase in Form von Tröpfchen vorliegt, **gekennzeichnet durch** eine monodisperse Tröpfchengrößenverteilung.

**3.** Verfahren nach Anspruch 1 oder Anspruch 2, wobei in Schritt (c) die dispergierte Phase in die kontinuierliche Phase eingespritzt oder eingepumpt wird, so dass die dispergierte Phase einer vorbestimmten Bahn folgt.

**4.** Verfahren nach einem der vorhergehenden Ansprüche, wobei die Fixierungsbehandlung ausgewählt ist aus der Gruppe umfassend eine Temperaturbehandlung, chemische Fixierung oder Kristallisation.

**5.** Verfahren nach einem der vorhergehenden Ansprüche, wobei die kontinuierliche Phase auf Öl basiert.

**6.** Verfahren nach einem der vorhergehenden Ansprüche, wobei die dispergierte Phase eine Ölphase oder eine wässerige Phase ist, die ein Geliermittel umfasst.

**7.** Verfahren nach Anspruch 6, wobei das Geliermittel ausgewählt ist aus der Gruppe umfassend Gelatine, κ-Carrageenan, Pektin, Iota-Carrageenan, Alginat, Gellan, Furcelleran oder Mischungen davon, mehr bevorzugt, Gelatine oder κ-Carrageenan.

**8.** Verfahren nach einem der vorhergehenden Ansprüche, wobei die Fixierung nach einer ersten Verformungsbehandlung zu einem Zeitpunkt erfolgt, wenn die verformten Tröpfchen teilweise entspannt sind.

9. Verfahren nach einem der vorhergehenden Ansprüche, wobei die dispergierte Phase mindestens zwei Phasen, vorzugsweise eine Ölphase und eine wässerige Phase, umfasst.

10. Zusammensetzung, erhalten mit einem Verfahren nach einem der vorhergehenden Ansprüche.

11. Nahrungsmittelprodukt, umfassend eine mit einem Verfahren nach einem der Ansprüche 1-9 erhaltene Zusammensetzung.

12. Vorrichtung, umfassend eine Strömungskammer, in welcher eine Dehnströmung oder eine Kombination aus Scherströmung und Dehnströmung auf den Inhalt ausgeübt wird, wobei die Strömungskammer ein Mittel zum Zuliefern der kontinuierlichen Phase, Mittel zum Zusetzen eines Materials für die zu dispergierende Phase, Mittel zum Steuern der Strömungsgeschwindigkeit und -art, Mittel zum Auslassen der kontinuierlichen Phase, Mittel zur Reduktion der Strömungsstärke und Mittel zum Erhalt einer Fixierung aufweist.

13. Vorrichtung nach Anspruch 12, umfassend einen Stagnationspunkt oder eine Stagnationszone.

**Revendications**

1. Procédé de préparation d'une composition comprenant au moins deux phases, une première phase qui est une phase continue et une deuxième phase qui est une phase dispersée, ledit procédé comprenant les étapes consistant à :

    a) fournir le matériau de la phase continue sous une forme liquide,
    b) fournir le matériau pour la phase à disperser,
    c) ajouter le matériau pour la phase à disperser au matériau de la phase continue donnant une composition comprenant au moins deux phases,
    d) soumettre la phase dispersée à un traitement de déformation par écoulement,
    e) soumettre la phase dispersée à un traitement de fixation,

    dans lequel l'étape (e) est réalisée pendant ou après l'étape (d), **caractérisée en ce que** le traitement de déformation est choisi parmi un écoulement d'élongation ou une combinaison d'un écoulement de cisaillement et d'un écoulement d'élongation.

2. Procédé selon la revendication 1, dans lequel la composition de l'étape (c) comprend une phase continue et une phase dispersée, laquelle phase dispersée est présente sous la forme de gouttelettes, **caractérisée par** une distribution de taille de gouttelette monodispersée.

3. Procédé selon la revendication 1 ou 2, dans lequel dans l'étape (c), la phase dispersée est injectée ou pompée dans la phase continue de sorte que la phase dispersée suive un chemin pré-déterminé.

4. Procédé selon l'une quelconque des revendications précédentes, dans lequel le traitement de fixation est choisi dans le groupe comprenant un traitement à une certaine température, une fixation chimique ou une cristallisation.

5. Procédé selon l'une quelconque des revendications précédentes, dans lequel la phase continue est basée sur une huile.

6. Procédé selon l'une quelconque des revendications précédentes, dans lequel la phase dispersée est une phase huileuse ou une phase aqueuse comprenant un agent gélifiant.

7. Procédé selon la revendication 6, ans lequel l'agent gélifiant est choisi dans le groupe comprenant la gélatine, la k-carragénine, la pectine, la iota-carragénine, l'alginate, le gellan, le furcelleran ou des mélanges de ceux-ci, plus préférablement la gélatine ou la k-carragénine.

8. Procédé selon l'une quelconque des revendications précédentes, dans lequel la fixation a lieu après un premier traitement de déformation, à un moment où les gouttelettes déformées se sont partiellement relaxées.

9. Procédé selon l'une quelconque des revendications précédentes, dans lequel la phase dispersée comprend au moins deux phases, de préférence une phase huileuse et une phase aqueuse.

10. Composition obtenue par un procédé selon l'une quelconque des revendications précédentes.

11. Produit alimentaire comprenant une composition obtenue par un procédé selon l'une quelconque des revendications 1 à 9.

12. Appareil comprenant une chambre d'écoulement, dans lequel l'écoulement d'élongation ou une combinaison d'un écoulement de cisaillement et d'un écoulement d'élongation est exercé(e) sur les contenus, ladite chambre d'écoulement comprenant un moyen pour fournir la phase continue, un moyen d'addition d'un matériau pour la phase à disperser, un moyen de contrôle de la vitesse et du type d'écoulement, un moyen de sortie de la phase continue, un moyen de réduction de la résistance d'écoulement et un moyen pour obtenir la fixation.

13. Appareil selon la revendication 12, comprenant un point ou une zone de stagnation.

# Fig.1a.

# Fig.1b.

| Type of flow | Simple shear | Hyperbolic |
|---|---|---|
| Flow pattern | | |
| Drop shape | | |
| Velocity gradient G = | $du_z/dy$ | $du_z/dz$ |
| Rotation rate | G/2 | o |

# Fig.2.

Continuous phase

Dispersed phase

Dispersed phase

# Fig.3.

Gas window

y

x

Stagnation point

# Fig.4.

Position 2

Fixation
zone 1

Position 1

Fixation zone 2

Fixation
zone 3.2

Fixation
zone 4.2

Fixation
zone 4.1

Fixation
zone 3.1

# Fig.5.

## Circularity shape for factors for various outlines

1.05

1.27

1.53

1.18

1.34

1.60

1.23

1.38

2.29

3.51

5.00

## Circularity shape factors for ellipses

1

1.112

1.017

1.178

1.38

1.057

1.25